# EUROPEAN PATENT SPECIFICATION

(11) **EP 0 888 513 B1**
(45) Date of publication and mention of the grant of the patent: **21.11.2001**
(21) Application number: 97919827.2
(22) Date of filing: 03.04.1997
(51) Int. Cl.: F16L 59/20

(54) **METHOD AND TOOL FOR JOINING, REPAIRS AND MAINTENANCE OF INSULATING LINE PIPES**
VERFAHREN UND VORRICHTUNG ZUM ZUSAMMENFÜGEN, REPARIEREN UND WARTUNG VON MIT EINER ISOLIERSCHICHT VERSEHENEN ROHREN
PROCEDE ET OUTIL D'ASSEMBLAGE, DE REPARATION OU D'ENTRETIEN DE TUBES A REVETEMENTS ISOLANTS

(30) Priority: 03.04.1996 SE 9601288
(43) Date of publication of application: 07.01.1999
(73) Proprietor: Appelblad, Karl Gunnar, 903 62 Umea (SE); Gunnarsson, Lars, 903 25 Umea (SE)
(72) Inventor: GUNNARSSON, Lars, S-903 25 Ume (SE)
(74) Representative: Onn, Thorsten
(86) International application number: SE9700568
(87) International publication number: WO9737167

(56) References cited:
- EP-A- 0 221 692
- DK-B- 162 588
- DK-B- 163 647
- NO-B- 164 057
- SE-B- 460 306

## Description

The present invention relates to a method pertaining to joining or repairing thermally insulated line pipes that include a weldable plastic outer pipe which surrounds an inner pipe that is embedded in an insulating layer, and to a tool for carrying out the method. Such a method is e.g. known from DK 162 588 B.

Thermally insulated line pipes are normally used to transport heat-conducting fluids, such as the pipelines of district or remote heating systems and district or remote cooling systems for instance, and include steel piping through which the liquid heat-carrying medium is conveyed. The steel piping is then embedded in an insulating material, typically polyurethane foam and encased in an outer moisture-proof, weldable plastic casing, normally polyethylene and so-called PEHD. The pipes are factory manufactured in sections which are transported from the factory to the installation site.

The pipes are intended to be buried under ground and will therefore be subjected to high stresses and strains, for instance by water or moisture that can constantly penetrate into the pipe and cause corrosion, which in the long term can result in leakage and the need for subsequent repairs. Such pipes, or piping, will often lie beneath roads, highways and the like, which makes access to damaged pipes both difficult and expensive, since the pipes must be lifted from the ground.

Thus, repair costs are particularly high, even in the case of certain district heating pipes with which an alarm wire which enables a leakage to be localized with a relatively high degree of accuracy is disposed in the foam so as to lie between the steel pipe and the outer pipe . Consequently, it is of the utmost importance that pipe joins are of the highest quality and mechanical strength, both with respect to new installations and to the repair of existing installations. Uneven quality, or in the worst case systematic errors in installation, can, in the long term, be disastrous with respect to the total economy of a district heating network.

A number of methods of joining the moisture-proof outer pipes of district or remote heating piping are commercially available. Experience has shown that methods which utilize welded joints are often more advantageous in the long term than other solutions. Welded joints are not trouble-free, however.

The problems associated with producing weld joints of uniform quality by hand, and particularly weld joints that extend circumferentially around the pipes, are well known. Even more troublesome is the welding work that needs to be carried out on installations or repair sites where prevailing external conditions often make the work very difficult to carry out. Space is confined, temperature varies greatly from season to season, and the place where repairs are required are often partially filled with water. This water also constitutes a safety hazard, since welding apparatus will normally require the supply of electric current, and consequently it is desirable that as much as possible of the work that involves the use of electricity can be carried out by workmen positioned at a distance from and completely outside the hole or trench in which the repair is to be made.

Known to the art is a method in which a circumferential weld is made with the aid of an extrusion welding machine which is adapted to run in a rig, although this method can only be used in conjunction with new installations. The extrusion welding machine is positioned over the join between the connecting sleeve and the outer pipe and the wheeled rig is then driven by a chain around the pipe at a given speed while activating the extrusion welding machine at the same time.

Although these welding methods result in strong joints, they are, unfortunately, also relatively costly to put into effect and place high demands on conditions. Because the rig used in the last-mentioned method "wanders" around the outer pipe, there is also required a clearance or free-path around the outer pipe of at least about 60 cm, and the width of the joint will therewith greatly exceed the width of a joint that is welded manually. The method cannot be used in respect of pipe diameters that are smaller than 40 cm.

A further known method involves the use of an axially split or slotted plastic sleeve that has a heating element fused into the inner surface of each end of the sleeve. The sleeve is forced over the joint and pressed firmly into abutment with the outer pipe with the aid of a tool herefor. The tool has the form of a ring-shaped openable frame which includes an inflatable hose around its inside and which is intended to be placed around the joint. When pressing the sleeve against the pipe, the hose is inflated so as to fill the space between sleeve and frame. The heating wire or rod is then connected to a welding apparatus which delivers current to the wire, or rod, and therewith weld the sleeve firmly to the outer pipe.

Fusion of a heating wire in the inner surface of the sleeve requires the sleeves to be produced in standard lengths, which, in turn, means that a person carrying out repairs must have access to a large number of sleeves. Standard length sleeves are often unnecessarily long and material consumption is therefore greater than necessary. A negative subsequence of excessively long sleeves is that they overlap the outer pipe to a greater extent than that which a welding joint can later bind, resulting in the risk of the formation of small spaces or cavities between the outer pipe and the sleeve where the foam is unable to expel the air. This allows water condensation to form and if the pressure in the sleeve is high during foaming there is a risk that the joint will be broken at a sharp angle and result in a fracture indication on the inside of the welded joint. Another problem is that there is a risk of damaging the heating wire that is embedded in the inner surface of the sleeve, when grinding or polishing the surface. to remove dirt or oxides. The presence of such oxides on the plastic surface are liable to significantly weaken the weld. Another problem with the aforedescribed wire-heated welding method is the uneven distribution of and the small extent of welding heat in the surface between sleeve and outer pipe, which makes it difficult to obtain a uniform, coherent and tight weld.

Accordingly, an object of the present invention is to overcome the aforesaid drawbacks by means of a method and a tool with which a strong and impervious weld joint can be made in a simple, positive and cost-effective manner when joining together insulated line pipes, e.g for district heating and district cooling systems.

This object is achieved with a method and a tool defined in the following independent Claims.

Exemplifying embodiments are set forth in the accompanying dependent Claims and will be evident from the following description.

The advantage of working with split or slotted sleeves is that the same method can also be used in repair work where it is desired to avoid cutting the inner pipe.

The abutment between sleeve and outer pipe is also enhanced, because no stresses will occur in the outer sleeve as variations in diameter are taken up by the axial slit, or slot, in the sleeve.

One risk of using sleeves that have not been slit is that when such sleeves are threaded over the outer pipe prior to the inner pipe being joined, difficulty may be found in loosening the sleeve when it is to be moved over the pipe join, since such sleeves tend to bind against the outer pipe. This problem is not found with slotted sleeves. The subsequent fitting of the welding-heat delivering strip enables oxide layers on the plastic surfaces to be removed from the pipe and the region of the inner surface of the sleeve that shall be welded to the outer pipe.

According to one exemplifying embodiment, the heat delivering strip has the form of a net which can be delivered in widths of 40 mm and clipped to a length of 100 m in one wiredirection and then reeled onto a simple reel. This significantly lowers storage and transportation costs and provides the user with a high degree of flexibility. For instance, in the event of an urgent repair, the workman is able to cut the net into desired lengths according the circumference of the pipe concerned.

Several pipe manufacturers are able to deliver sleeve blanks in lengths of up to 16 m, which also results in low prices. Sixteen metres is the longest join length that can be achieved theoretically in practice, and the delivery of sleeve blanks of 16 m in length provides a significant advantage in respect of repair work and is to be compared with present-day longest join lengths of about 90 cm.

Other advantages afforded by the present invention, and then particularly the use of electric welding with a resistance net in the circumferential welding joint reside in the small space required to carry out the inventive method, which also results in low labour costs. Furthermore, when the welding tool has been mounted in position the workman concerned can calmly check that everything is in place and that a good connection has been made between the tool electrodes and the welding net. If desired, the current supply can be controlled from a location outside the trench or hole in which the work is carried out. This enhances safety and weld quality. No movable parts that can negatively affect and vary the welding result are present at the moment of welding the pipes.

The method may, e.g., be carried out with a 230 V welding system or some other relevant mains voltage, which simplifies drawing of electricity to the tool and reduces set-up times and requirements on electrical plant capacity.

Furthermore, the use of a net structure for delivering heat between those surfaces to be welded provides an extremely uniform distribution of heat over the full length and width of the weld, therewith providing an homogenous weld of very high performance.

According to the invention, subsequent to completing the circumferential welds the axial slot is widened with the aid of a hand-held cutter to form a channel in the sleeve, also at the sleeve ends, therewith removing those parts of the strip that project out of the slit. The thus widened slit will ensure good material contact along the full extent of the slit or channel.

In extreme cases, for instance when repairing pipelines beneath road surfaces, waterways, etc., foam can be injected into the sleeve prior to welding together the slit. In this latter case, foam-injection holes are drilled in the slit through an underlying element. When injection of the foam is completed, the holes are filled with weld at the same time as slitting the sleeve, therewith avoiding plug welding, and the finished sleeve will solely present two circumferential welds that are mutually joined by a longitudinal weld bead. This avoids a potential fault source.

One significant advantage with our tool in relation to known tools is its low weight. For instance, a known clamping tool for diameters of 355 mm weighs more than 20 kg, whereas the inventive tool weighs about 5 kg, meaning that our tool greatly improves the working environment of the workman concerned.

Further features of the invention and advantages afforded thereby will be evident from the following detailed description of a preferred embodiment of the invention, this embodiment being given by way of example only and therefore does not limit the scope of the invention. So that the following description will be more readily understood, the text includes reference signs which relate directly to the Figures of the drawings and which identify equivalent or like parts.

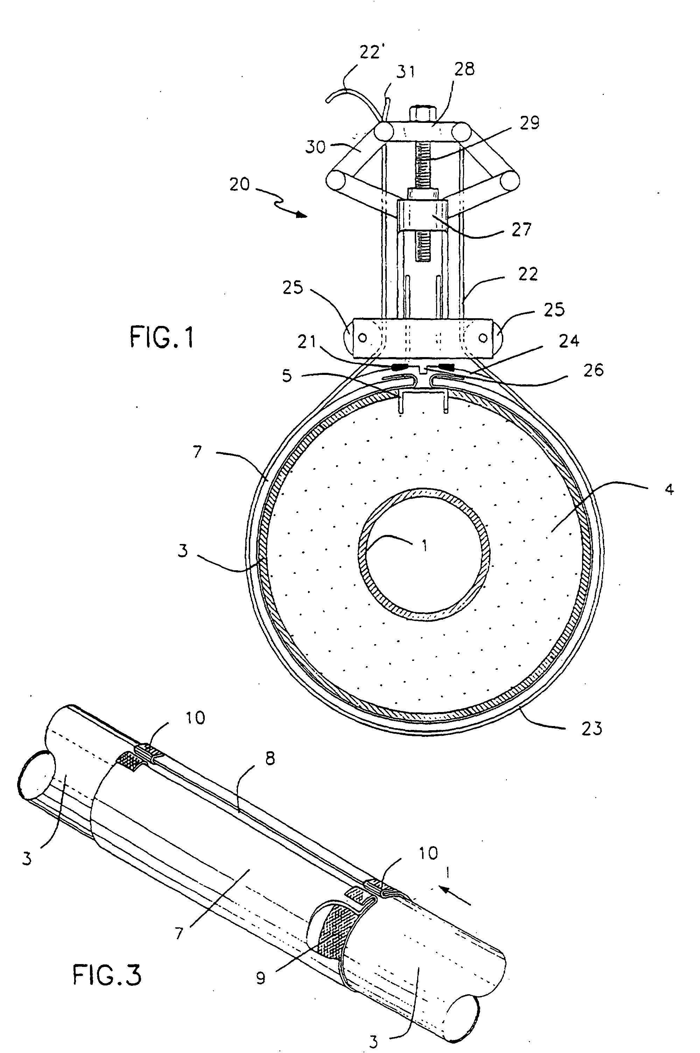

**Fig. 1** illustrates an embodiment of an inventive tool mounted in the vicinity of a pipe join.

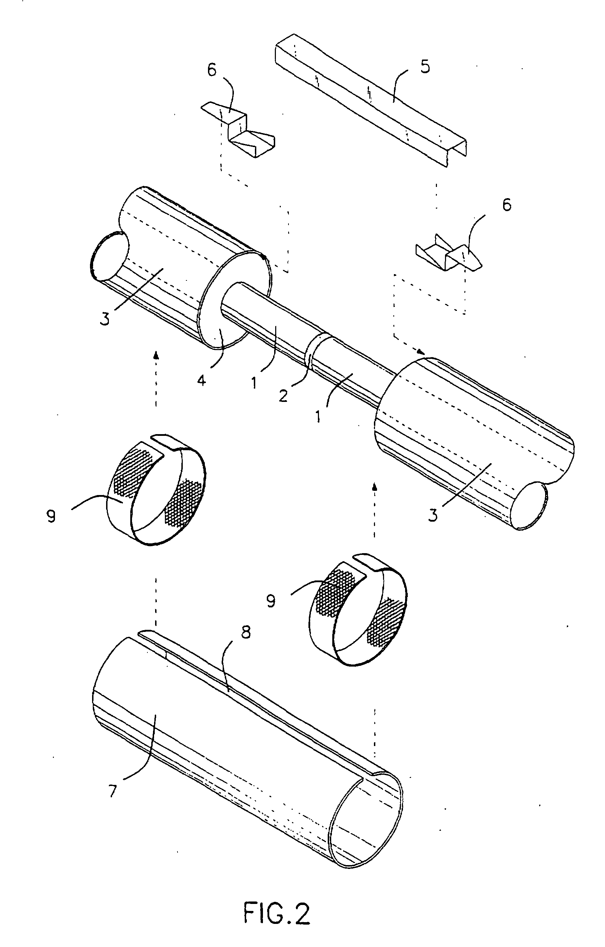

**Fig. 2** is an exploded, schematic and perspective view of parts of a pipe joint effected in accordance with one embodiment of the invention.

**Fig. 3** is a partially cut-away view of a pipe assembly ready to be welded in accordance with one embodiment.

In the new installation of district or remote heating pipes, the work is normally commenced by welding together, as at 2, the outwardly projecting inner pipes 1, which are normally made of steel. In the case of repair work, the outer pipe 3 is removed in the location of damaged piping, and preferably also the insulation 4, and hence the starting position can be compared with that of a new installation subsequent to having welded the inner pipes together.

According to the illustrated embodiment, an underlying element 5, in the form of a self-supporting, flexurally rigid and preferably extruded plastic strip, is then placed between the opposing ends of the remaining outer pipes. In the present embodiment, the underlying element 5 is carried by attachments 6, one at each end of an outer pipe. The attachments may conveniently have the form of bent sheet-metal elements that are pressed partially into the insulation beneath the outer pipe and which include a part that supports the underlying element. The attachments may alternatively have other shapes and comprise other materials, but should not extend down to the inner pipe since they would then constitute an uninsulated bridge along which condensation can form. If the joint has a length such as to require further support for the underlying element, so as to ensure that the element will not sag as a result of its bearing distance, such support will preferably be comprised of the same material as the insulating material.

The illustrated underlying element has a U-shaped crosssection, although other flexurally rigid profile shapes may be used, such as T-profiles, I-profiles, etc.

The U-profiled underlying element may be cut on site to required lengths and disposed in said attachments with the bottom side, or some other essentially smooth side, facing radially outwards.

A sleeve 7 can be cut to desired length from a longer sleeve blank. This length will preferably be the same as the distance between the opposing outer pipe-ends and include an addition corresponding to the axial extension or width of the weld joint on each side. It is desirable that the sleeve overlap will not be greater than the entire overlap that can contribute towards the circumferentially extending weld joint. In one embodiment of the invention, the circumferential weld joint has a width of 40 mm.

The sleeve blank, and therewith the sleeve 7, is slit, at 8, in its longitudinal direction or likewise cut to enable the sleeve to be fitted over a join, even when the inner pipe is intact between the mutually opposing outer pipe-ends.

The diameter of the sleeve is substantially the same as the diameter of the outer pipe, wherewith a small gap 8 is formed along the slit 8 when the sleeve is fitted over the outer pipes that flank the joint.

In order to obtain the best weld joint, the plastic surfaces to be welded together are cleaned from oxides and dirt, which have a negative influence on the mechanical strength and the tightness of the weld joint.

The sleeve 7 is fitted over the join and, if necessary, turned so that the slit 8 will be located immediately above the underlying element 5. An electrically conductive and moltenplastic permeable strip 9 is cut into a length that exceeds the circumferential measurement of the outer pipe. The strip 9, which may comprise stainless steel net, is positioned between the sleeve 7 and the outer pipe 3, such that the free ends 10 of the strip extend out through the slit 8, into which they enter from mutually opposite directions. The free ends 10 are then folded back over respective edges of the slit, so as to be spaced apart in the slit 8.

Each of the upwardly folded ends 10 of the strip can then be connected to a respective electrode 21 which is connectable to a unit capable of delivering current sufficient to heat the strip to the melting temperature of the plastic material.

Before heating the strip 9, a clamping device 20 which functions to press the sleeve 7 against the outer pipe 3, so as to clamp the strip 9 between the surfaces of the sleeve and pipe, is mounted in position.

Subsequent to checking that all parts are correctly positioned, e.g. that the slit is located above the underlying element, that the strip is in place and that the sleeve overlaps the adjacent end of the outer pipe to the extent desired, current can be applied to the strip via the electrodes and with the aid of a welding unit, for instance. The entire strip is heated simultaneously and the oxide-free plastic surfaces around the strip will melt and fuse together. The current is switched off, leaving a reinforced, broad and fully molten weld joint around the strip.

The clamping device 20 is removed and the same welding procedure then repeated at the other end of the sleeve. Naturally, both circumferential welds can be made simultaneously when two clamping devices are available.

The risk of sparking and subsequent damage in the vicinity of the circumferential weld can be conveniently avoided by placing heat-resistant insulation between the strip ends 10 in the slit 8 and between the rearwardly folded strip-ends 10 and the outer surface of the sleeve 7. For instance, pieces of Teflon® or like heat-resistant material may be used in this regard, and preferably also flexible material that will conform to any shape variations.

Subsequent to the circumferential welds of the sleeve 7 being completed and the clamping device 10 removed, the strip-ends 10 are removed in some suitable manner. This can be achieved, for instance, by removing said ends from the slit 8 with the aid of a hand-held cutter or like tool. The removal of material and the widening of the slit 8 in the proximity of the circumferential weld will also remove all pores or cracks that may occur in the transition to the slit. Thus, a complete overlap is possible between the weld that is made along the slit and the earlier made circumferential weld joints. This, in combination with providing an oxide-free surface by the removal of contaminating material, ensures complete smelting and fusion in all weld joints.

When the circumferential welds have been made and the slit is free to be filled with weld, a complete weld bead is made along the full length of the slit. A so-called extrusion welding device is used to this end, which also delivers material to the weld joint.

The underlying element 5 will herewith be fused together with the sleeve 7 and the material delivered by the welding device. Subsequent to welding the joint, it is often desirable to pressure-test the new pipe section before it is filled with insulation. A pressure test is made by drilling a hole in the longitudinally extending weld joint. The hole is drilled at precisely this location because of the relatively large wall thickness at this location, this thickness being the result of including the sleeve and the underlying element in the weld joint, as before mentioned, which provides more stable holeedges during the pressure test.

Subsequent to the pressure test, there is drilled a further hole, preferably one at each end of the joint, through which insulation, for instance polyurethane foam, can be injected in a known manner.

When the cavity inwardly of the sleeve 7 has been filled with foam, the holes are drilled, milled or reamed to a conical shape and a conical plastic plug is glued or welded firmly in the holes, e.g. by means of a mirror welding device or some other device suited for this purpose.

As a result of the contribution of the underlying element to the thickness of the longitudinally extending weld joint, the conical plugs will have a substantially larger abutment area at the location at which they shall be welded into the filling and pressure-testing holes than in the case of conventional joining methods, therewith providing more secure fastening of the plugs and further reducing the risk of moisture penetration.

The inventive tool includes a clamping device 20 for pressing an outer pipe against an inner pipe, particularly a slotted sleeve 7 threaded onto a plastic outer pipe 3. The clamping device includes a flexible strap 22 which included a loop 23, and the free ends of which can be connected to a tensioning device. With the loop fitted around the sleeve, the tensioning device can be actuated to cause the loop to urge the sleeve 7 against the pipe 3.

The loop tensioning device includes at one end a supportive part 24 which is intended to rest against the sleeve 7. Mounted adjacent the supportive part are two parallel guide rollers 25 which are spaced apart at a distance substantially smaller than the diameter of the sleeve. That part of the sleeve circumference engaged by the loop 23 can be increased by placing the clamping strap 22 between the guide rollers, i.e. connecting the free ends of the loop to the tensioning device via the guide rollers.

When the guide rollers 25 are located inwardly of the supportive part 24 and at a short distance above its abutment surface, the abutment surface of the supportive part in coaction with the loop will exert a clamping force around substantially the full circumference of the sleeve.

The abutment surface of the supportive part 24 is preferably concave in shape such as to conform to the outwardly rounded shape of the sleeve and therewith provide stable abutment. At least the abutment surface of the supportive part will preferably be made of an electrically insulating material which is able to withstand the applied elevated welding temperatures. The supportive part 24, or the foot part of the supportive part 24 or the abutment surface may conveniently be exchangeable so as to adapt to different pipe diameters. Larger dimensions can normally be managed with one foot, while dimensions beneath 20 cm in diameter may require an especially adapted foot. The foot may also be conveniently comprised of a slightly shape yielding material which will adapt the abutment surface to the diameters of the pipes concerned.

The clamping strap 22 may also be made of a flexible material that can withstand elevated temperatures.

The abutment surface includes an electrically insulating projection 26. The projection is intended to be received in the slit 8 and there function as a partition wall between the electrically conductive strip-ends 10 bent up over the edges of the slit. The projection 26 may have the form of a lip or a ridge.

The abutment surface also includes two electrodes 21, one on each side of the projection 26, for applying electric current to the electrically conductive strip, the ends 10 of which are bent up on respective sides of the slit, as before mentioned. The electrodes 21 are connected to a suitable current source, e.g. a welding unit, which is able to deliver a controlled current to the electrodes for a controlled period of time.

In one particularly preferred embodiment of the invention, the tensioning device includes a threaded part 27 firmly mounted adjacent the supportive part and a threaded part 28 which is movable in relation to the threaded part 27 and the thread of which is opposite to the thread on the part 27, and a threaded tensioning screw 29 which mutually connects the threaded parts 27, 28, wherein said threaded components operate in the manner of a bottlescrew such that rotation of the screw 29 in a first direction increases the distance between the threaded parts 27, 28, while rotation of the screw in an opposite direction will cause the threaded parts to approach one another. The threaded parts 27, 28 are prevented from rotating in relation to one another in some suitable manner, e.g. with the aid of links 30, guide rails, guide channels or like solutions known to the skilled person, in which one component is allowed to move in a longitudinal direction but is held against rotation.

In the illustrated case, the free ends of the clamping belt are positioned adjacent the movable threaded part 28. One end of the clamping strap is fixedly mounted, whereas the other end 22' of the strap is detachably secured in a fastener device 31. The fastener device 31 has a smooth acting clamping attachment where the clamping strap is inserted in an eccentric latching means. The latching means permits the strap to move freely in one direction, so as to enable the loop to be placed around the sleeve. When the loop has been placed around the sleeve, the tensioning screw is turned so that the strap will move in the opposite direction in the fastener device and self-lock in the eccentric latching means.

It will be understood that the illustrated and described tensioning device can be modified within the concept of the invention, wherewith pressing of the sleeve 7 against the pipe 3 can be achieved with the aid of lever arms or rollers or by some other linear or non-linear strap tensioning method. The tensioning screw may, for instance, be replaced with an hydraulic, pneumatic device or a device operated in some other way, for instance piston-cylinder devices or rack-and-pinion devices acting between the supportive part and the ends of the clamping strap.

A preferred, although not necessary feature, however, is one in which the loop is applied by tension forces acting at both ends of the loop, so as to obtain a balanced clamping force.

## Claims

1. A method of joining or repairing thermally insulated line pipes that comprise a weldable plastic outer pipe (3) which surrounds an inner pipe (1) embedded in an insulating layer (4), wherein the inner pipe lies generally exposed or is laid bare between two mutually opposing outer pipe-ends, wherein the method comprises fitting a slotted sleeve (7) of weldable plastic material over the exposed part of the inner pipe (1), said outer sleeve having a length that exceeds the distance between said mutually opposing pipe-ends such as to overlap said ends to a given extent, and widening said slit (8), **characterized by** placing a flexurally rigid underlying element (5) made of weldable plastic material between the mutually opposing spaced outer pipe-ends immediately radially inwards of the slit (8) and spaced from the inner pipe (1), by welding the sleeve to the outer pipes and welding together the slit, wherein the underlying element functions as a counter-pressure means when welding together the slit and also coacts with the sleeve to form an homogenous part of the axially extending welding joint along the path extending between said outer pipe-ends.

2. A method according to Claim 1, **characterized by** placing between the outer pipe (3) and the sleeve (7) an electrically conductive strip or band (9) which is permeable to molten plastic and which has a width that at least corresponds to said overlap; passing the ends (10) of the strip up through the slit (8); fitting the sleeve against the end of the outer pipe and applying an electric current to the strip ends (10) that protrude from the slit (8) over a given period of time, thereby heating and fusing the strip with the plastic surfaces lying in abutment therewith to form a welding joint having a width corresponding to said overlap.

3. A method according to Claim 1 or 2, **characterized in that** the slit (8) is widened to a uniform width along the full length of the sleeve (7), preferably by milling; and **in that** the slit (8) is thereafter extrusion-welded, preferably in one continuous pass.

4. A method according to Claim 1, 2 or 3, **characterized by** drilling a hole through the slit joint and the underlying element for the purpose of pressure testing the joint; filling the joint with foam through the drilled hole; and inserting a plug in said hole provided in this relatively thick part such as to seal said hole.

5. A tool for circumferentially welding plastic piping, comprising a clamping device for urging an axially slotted plastic pipe against an inner plastic pipe, wherein an electrical heating device is provided between the plastic pipes for the purpose of delivering welding heat, wherein in the clamping device includes a flexible clamping strap which is looped around the outer pipe and the free ends of the clamping strap are connected to a tensioning device which functions to tighten the loop and therewith press the outer pipe against the inner pipe, **characterized in that** one end of the tensioning device carries a supportive part (24) for abutment with a slit straddling the outer pipe (3); **in that** electrode (21) elements are disposed in the abutment surface, **in that** two guide rollers (25) are arranged in mutually parallel and mutually spaced relationship adjacent the supportive part (24), wherein the distance between said rollers is much smaller than the diameters of the plastic pipes; and **in that** the parts of the strap extending from said loop run between the guide rollers.

6. A tool according to Claim 5, **characterized in that** the abutment surface of the supportive part is concave so as to provide good abutment with the outwardly curved pipe surface; and **in that** at least the abutment surface is made of an electrically insulating material.

7. A tool according to Claims 5 or 6, **characterized in that** the abutment surface includes an electrically insulating projection (26) which is received in the slit (8) and there separates electrical conductors (9) entering from mutually opposite sides of the slit; and **in that** electrodes (21) are disposed on each side of the projection for application of an electric current to said conductors.

8. A tool according to any one of Claims 5 - 7, **characterized in that** the tensioning device includes a first threaded part (27) which is fixedly mounted adjacent the supportive part and a second threaded part (28) which is movable in relation to the threaded part (27) and which has an opposite thread to said threaded part (27), and a tensioning screw (29) which interconnects the threaded parts; **in that** the free ends of the flexible clamping strap are disposed adjacent the movable threaded part (28); and **in that** at least one of the fastener devices (31) enables smooth, continuous fastening of the strap (22'), wherein smooth fastening of the clamping strap is preferably achieved with the aid of an excentric latching facility capable of allowing the strap to move freely in one direction for adjustment of the loop around the pipes and of latching the strap in an opposite direction to enable the tensioning force to be applied.

## Patentansprüche

1. Verfahren zum Zusammenfügen oder Reparieren von thermisch isolierten Rohren, welche ein schweißbares äußeres Rohr (3) aus Plastik aufweisen, welches ein inneres Rohr (1) umgibt, welches seinerseits in einer Isolierschicht (4) eingebettet ist, wobei das innere Rohr im Allgemeinen frei oder bloß liegt zwischen zwei sich wechselseitig gegenüberliegenden äußeren Rohrenden, welches Verfahren das Anbringen einer geschlitzten Hülse (7) aus schweißbarem Plastikmaterial um den freiliegenden Teil des inneren Rohrs (1) herum umfasst, wobei diese äußere Hülse eine Länge hat, welche den Abstand zwischen den beiden sich wechselseitig gegenüberliegenden Rohrenden überschreitet, um so die Enden um einen bestimmten Betrag zu überlappen, sowie das Erweitern des Schlitzes (8), **gekennzeichnet durch** das Platzieren eines biegesteifen darunter liegenden Elements (5) aus schweißbarem Plastikmaterial zwischen die sich wechselseitig gegenüberliegenden beabstandeten Rohrenden unmittelbar radial einwärts des Schlitzes (8) und beabstandet von dem inneren Rohr (1), **durch** Schweißen der Hülse an die äußeren Rohre und Zusammenschweißen des Schlitzes, wobei das darunter liegende Element als Gegendruckmittel beim Zusammenschweißen des Schlitzes wirkt und auch mit der Hülse zusammenwirkt, um einen homogenen Teil der sich axial erstreckenden Schweißverbindung entlang des Weges auszubilden, welcher sich zwischen den äußeren Rohrenden erstreckt.

2. Verfahren nach Anspruch 1, **gekennzeichnet durch** das Platzieren eines elektrisch leitfähigen Streifens oder Bands (9) zwischen das äußere Rohr (3) und die Hülse (7), welcher/welches durchlässig für geschmolzenes Plastik ist und eine Breite hat, welche zumindest dem Überlappungsbereich entspricht; das Hindurchführen der Enden (10) des Streifens/Bands nach oben **durch** den Schlitz (8); das Anpassen der Hülse gegen das Ende des äußeren Rohrs und das Aufbringen eines elektrischen Stroms auf die Enden des Streifens/Bands (10), welche von dem Schlitz (8) hervorstehen, über einen bestimmten Zeitraum, wodurch der Streifen erhitzt und mit den Plastikflächen verbunden wird, welche daran anstoßen, um eine Schweißverbindung auszuformen, welche eine Breite hat, die dem Überlappungsbereich entspricht.

3. Verfahren nach Anspruch 1 oder 2, **dadurch gekennzeichnet, dass** der Schlitz (8) entlang der gesamten Länge der Hülse (7) auf eine gleichmäßige Breite erweitert wird, vorzugsweise durch Fräsen; und dass der Schlitz (8) anschließend extrusionsgeschweißt wird, vorzugsweise in einem kontinuierlichen Durchgang.

4. Verfahren nach Anspruch 1, 2 oder 3, **gekennzeichnet durch** das Bohren einer Öffnung **durch** die Schlitzverbindung und das darunter liegende Element zum Zweck eines Drucktests der Verbindung, **durch** das Auffüllen der Verbindung mit Schaum **durch** die gebohrte Öffnung und das Einführen eines Verschlusses in die Öffnung in diesem relativ dicken Teil, um so diese Öffnung zu versiegeln.

5. Werkzeug zum Umfangsschweißen eines Plastikrohrs, mit einer Klemmvorrichtung zum Zwingen eines axial geschlitzten Plastikrohrs gegen ein inneres Plastikrohr, wobei eine elektrische Heizvorrichtung zwischen den Plastikrohren vorgesehen ist zum Zweck des Zuführens von Schweißhitze, wobei die Klemmvorrichtung einen flexiblen Klemmstreifen beinhaltet, welcher um das äußere Rohr herum geschleift ist, wobei die freien Enden des Klemmstreifens mit einer Spannvorrichtung verbunden sind, welche dazu dient, die Schleife festzuziehen und damit das äußere Rohr gegen das innere Rohr zu drücken, **dadurch gekennzeichnet, dass** ein Ende der Spannvorrichtung einen Halteteil (24) für einen Anschlag mit einem Schlitz trägt, welche das äußere Rohr (3) überspannt; dass Elektrodenelemente (21) in der Anschlagfläche vorgesehen sind, dass zwei Führungsrollen (25) in einer wechselseitig parallelen und wechselseitig beabstandeten Beziehung zueinander angrenzend an das Halteteil (24) angeordnet sind, wobei der Abstand zwischen diesen Rollen viel kleiner ist als die Durchmesser der Plastikrohre; und dass die Teile des Streifens, welche sich von der Schleife her erstrecken, zwischen den Führungsrollen verlaufen.

6. Werkzeug nach Anspruch 5, **dadurch gekennzeichnet, dass** die Anschlagfläche des Halteteils konkav ist, um einen guten Anschlag für die nach außen gekrümmte Rohrfläche zu bieten; und dass zumindest die Anschlagfläche aus einem elektrisch isolierenden Material besteht.

7. Werkzeug nach Anspruch 5 oder 6, **dadurch gekennzeichnet, dass** die Anschlagfläche einen elektrisch isolierenden Vorsprung (26) beinhaltet, welcher sich in dem Schlitz (8) befindet und dort elektrische Leiter (9) trennt, welche von wechselseitig entgegengesetzten Seiten des Schlitzes her eintreten; und dass Elektroden (21) an jeder Seite des Vorsprungs vorgesehen sind zum Aufbringen eines elektrischen Stroms auf die Leiter.

8. Werkzeug nach einem der Ansprüche 5 bis 7, **dadurch gekennzeichnet, dass** die Spannvorrichtung einen ersten Gewindeteil (27) beinhaltet, welcher fest angrenzend an das Halteteil angebracht ist, sowie einen zweiten Gewindeteil (28), welcher beweglich bezüglich des Gewindeteils (27) ist und welcher ein Gewinde hat, das dem des Gewindeteils (27).entgegengesetzt ist, sowie eine Spannschraube (29), welche die Gewindeteile verbindet; dass die freien Enden des flexiblen Klemmstreifens angrenzend an den beweglichen Gewindeteil (28) angeordnet sind; und dass zumindest eine der Befestigungsvorrichtungen (31) ein sanftes, kontinuierliches Festziehen des Streifens (22') ermöglicht, wobei das sanfte Festziehen des Klemmstreifens vorzugsweise mit Hilfe einer exzentrischen Riegeleinrichtung erzielt wird, welche es ermöglicht, dass der Streifen sich frei in eine Richtung bewegt zum Anpassen der Schleife um die Rohre herum, und die außerdem den Streifen in einer entgegengesetzten Richtung verriegeln kann, um zu ermöglichen, dass die Spannkraft aufgebracht wird.

## Revendications

1. Procédé pour jointoyer ou réparer des tubes d'oléoduc thermiquement isolés qui comprennent un tube extérieur en matière plastique soudable (3) qui entoure un tube intérieur (1) noyé dans une couche isolante (4), dans lesquels le tube intérieur est posé généralement de façon exposée, ou bien posé nu entre deux extrémités mutuellement opposées de tubes extérieurs, le procédé comprenant le montage d'un manchon fendu (7) en matière plastique soudable pardessus la partie exposée du tube intérieur (1), ledit manchon extérieur ayant une longueur qui dépasse la distance entre lesdites extrémités mutuellement opposées des tubes de façon à recouvrir lesdites extrémités dans une mesure donnée, et l'élargissement de ladite fente (8), **caractérisé par** les opérations consistant à placer un élément sous-jacent (5) rigide vis-à-vis de la flexion et réalisé en matière plastique soudable, entre les extrémités mutuellement opposées et écartées des tubes extérieurs, immédiatement radialement vers l'intérieur de la fente (8) et écarté depuis le tube intérieur (1), à souder le manchon sur les tubes extérieurs et à souder la fente, de sorte que l'élément sous-jacent fait office d'élément de contre-pression lors de l'opération de soudage de la fente, et coopère également avec le manchon pour former une partie homogène du joint de soudure axial le long du trajet s'étendant entre lesdites extrémités des tubes extérieurs.

2. Procédé selon la revendication 1, **caractérisé par** les opérations consistant à placer entre le tube extérieur (3) et le manchon (7) un ruban ou une bande (9) électriquement conducteur(rice) qui est perméable à la matière plastique en fusion et qui possède une largeur correspondant au moins audit chevauchement ; à faire passer les extrémités (10) du ruban jusqu'à la fente (8) ; à monter le manchon contre l'extrémité du tube extérieur et appliquer un courant électrique aux extrémités (10) du ruban qui font saillie depuis la fente (8) pendant une période temporelle donnée, faisant ainsi chauffer et fondre le ruban avec les surfaces en matière plastique disposées en aboutement avec celui-ci pour former le joint soudé ayant une largeur correspondant audit chevauchement.

3. Procédé selon l'une ou l'autre des revendications 1 et 2, **caractérisé en ce que** la fente (8) est élargie jusqu'à une largeur uniforme le long de la totalité de la longueur du manchon (7), de préférence par meulage ; et ce que la fente (8) est ensuite soudée par extrusion, de préférence en une passe continue.

4. Procédé selon l'une des revendications 1, 2 ou 3, **caractérisé par** les opérations consistant à percer un trou à travers le joint fendu et l'élément sous-jacent dans le but de tester le joint en pression ; remplir le joint avec de la mousse à travers le trou percé ; et introduire un bouchon dans ledit trou prévu dans cette partie relativement épaisse, de manière à reboucher ledit trou.

5. Outillage pour souder de façon circonférentielle des tubes en matière plastique, comprenant un dispositif de serrage pour forcer un tube en matière plastique fendu axialement contre un tube intérieur en matière plastique, dans lequel un dispositif de chauffage électrique est prévu entre les tubes en matière plastique dans le but de fournir de la chaleur de soudage, dans lequel le dispositif de serrage inclut une bande de serrage flexible qui est disposée en boucle autour du tube extérieur, et les extrémités libres de la bande de serrage sont connectées à un dispositif de tensionnement dont la fonction est de tendre la boucle et de presser ainsi le tube extérieur contre le tube intérieur, **caractérisé en ce qu'**une extrémité du dispositif de tensionnement porte une partie de support (24) destinée à venir en aboutement contre une fente qui chevauche le tube extérieur (3) ; **en ce que** des éléments d'électrodes (21) sont disposés dans la surface en aboutement, **en ce que** deux rouleaux de guidage (25) sont agencés suivant une relation mutuellement parallèles et mutuellement écartés, en position adjacente à la partie de support (24), et telle que la distance entre lesdits rouleaux est beaucoup plus petite que les diamètres des tubes en matière plastique ; et **en ce que** les parties de la bande qui s'étendent depuis ladite boucle circulent entre les rouleaux de guidage.

6. Outillage selon la revendication 5, **caractérisé en ce que** la surface d'aboutement de la partie de support est concave de manière à procurer un bon aboutement avec la surface incurvée vers l'extérieur du tube ; et **en ce que** la surface d'aboutement au moins est réalisée en matériau électriquement isolant.

7. Outillage selon l'une ou l'autre des revendications 5 et 6, **caractérisé en ce que** la surface d'aboutement inclut une projection électriquement isolante (26) qui est reçue dans la fente (8) et qui sépare dans celle-ci des conducteurs électriques (9) entrant depuis des côtés mutuellement opposés de la fente ; et **en ce que** des électrodes (21) sont disposées sur chaque côté de la projection pour appliquer un courant électrique auxdits conducteurs.

8. Outillage selon l'une quelconque des revendications 5 à 7, **caractérisé en ce que** le dispositif de tensionnement inclut une première partie à pas de vis (27) qui est montée fixement en position adjacente à la partie de support, et une deuxième partie à pas de vis (28) qui est mobile par rapport à la partie à pas de vis (27) et qui présente un pas de vis opposé à celui de ladite partie à pas de vis (27), et une vis de tensionnement (29) qui assure une interconnexion des parties à pas de vis, **en ce que** les extrémités libres de la bande de serrage flexible sont disposées adjacentes à la partie à pas de vis mobile (28) ; et **en ce que** l'un au moins des dispositifs de fixation (31) permet une fixation régulière et continue de la bande (22'), cette fixation régulière de la bande de serrage étant de préférence assurée à l'aide d'un moyen de verrouillage excentrique capable de permettre à la bande de se déplacer librement dans une direction en vue de l'ajustement de la boucle autour des tubes, et de verrouiller la bande dans une direction opposée, pour permettre d'appliquer la force de tensionnement.
